**Europäisches Patentamt**

**European Patent Office**

**Office européen des brevets**

(11) Numéro de publication : **0 115 223 B1**

(12) **FASCICULE DE BREVET EUROPÉEN**

(45) Date de publication du fascicule du brevet :
16.04.86

(51) Int. Cl.⁴ : **B 60 T 13/52**

(21) Numéro de dépôt : **83402090.1**

(22) Date de dépôt : **26.10.83**

(54) Maître-cylindre comportant un organe de réaction annulaire.

(30) Priorité : **05.11.82 ES 517453**

(43) Date de publication de la demande :
**08.08.84 Bulletin 84/32**

(45) Mention de la délivrance du brevet :
**16.04.86 Bulletin 86/16**

(84) Etats contractants désignés :
**DE FR GB IT**

(56) Documents cités :
**EP-A- 0 045 231**
**EP-A- 0 045 233**
**FR-A- 2 261 911**

(73) Titulaire : **BENDIBERICA S.A.**
**Balmès 243**
**Barcelona 6 (ES)**

(72) Inventeur : **Simon Bacardit, Juan**
**Calle Mallorca 451**
**Barcelona 7 (ES)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention concerne les maître-cylindres pour au moins un circuit de freinage, du type comprenant un piston coopérant, via un organe en matériau élastomère de réaction annulaire, d'une part avec une collerette centrale solidaire d'un organe tubulaire destiné à être couplé à un piston d'un servomoteur d'assistance, et d'autre part avec un poussoir d'actionnement comprenant au moins une première zone d'appui contre l'organe de réaction annulaire.

Un tel maître-cylindre, susceptible d'être actionné au moyen d'un effort de poussée exercé sur le poussoir d'actionnement et/ou de traction exercé par l'organe tubulaire, est décrit en relation avec les modes de réalisation des figures 3 et 6 de la demande de brevet européen EP-A-0 045 233 au nom de la demanderesse, dont le contenu est supposé intégré ici pour référence, et est conçu typiquement pour être associé, dans un montage inversé, avec un servomoteur d'assistance actionnant l'organe tubulaire de traction pour constituer un système générateur de pression de freinage tel que décrit dans la demande de brevet européen EP-A-0 045 231, au nom de la demanderesse, dont le contenu est également supposé intégré ici pour référence.

Dans ce type de maître-cylindres, où l'organe tubulaire de traction traverse centralement le maître-cylindre, l'organe de réaction, constitué typiquement en un matériau élastomère, se présente nécessairement sous une forme annulaire dont une face axiale porte entièrement contre le piston primaire du maître-cylindre mais dont l'autre face axiale doit coopérer en engagement à la fois avec une collerette solidaire de l'organe tubulaire de traction et avec au moins une zone d'appui du poussoir d'actionnement afin de procurer, en fonctionnement, la réaction recherchée. Dans les techniques antérieures décrites dans les documents ci-dessus, le poussoir d'actionnement est prolongé périphériquement par une partie cylindrique entourant la collerette de l'organe tubulaire et venant porter contre une mince zone annulaire périphérique de l'organe de réaction annulaire, ce qui présente l'inconvénient de solliciter énergiquement et fréquemment cette mince zone périphérique annulaire de l'organe de réaction, avec les risques afférents, à la longue, d'endommagement ou de compactage de cette dernière, entraînant une perte progressive des sensations de réaction.

La présente invention a pour objet de proposer un agencement de maître-cylindre, du type défini ci-dessus, obviant à ces inconvénients et permettant notamment de garantir une fiabilité accrue du système de réaction.

Pour ce faire, selon l'invention, une deuxième zone d'appui est formée au moins partiellement par au moins un élément de poussée actionné par le poussoir et s'étendant axialement au travers d'un orifice correspondant formé dans ladite collerette.

Selon une autre caractéristique de l'invention, le maître-cylindre comprend au moins trois éléments de poussée angulairement répartis.

Avec un tel agencement, l'effort de poussée du poussoir d'actionnement est transmis en des zones de l'organe de réaction annulaire autres que la périphérie de ce dernier, c'est-à-dire intéressant notamment des portions plus importantes de la masse de l'organe de réaction annulaire entièrement entourées par des zones de cette masse de l'organe de réaction annulaire non intéressées par les éléments de poussée mais par la collerette solidaire de l'organe tubulaire de traction.

De plus, les extrémités des éléments de poussée venant en appui contre l'organe de réaction annulaire peuvent présenter des profils évolutifs, notamment biseautés, de façon à permettre une modulation de l'effort de réaction.

D'autres caractéristiques et avantages de la présente invention ressortiront de la description suivante de modes de réalisation, donnés à titre illustratif mais nullement limitatif, faite en relation avec les dessins annexés, sur lesquels :

la figure 1 est une vue schématique d'un système générateur de pression de freinage comprenant un maître-cylindre conformément à la présente invention ;

la figure 2 est une vue de détail de la zone cerclée de la figure 1 montrant les organes de sollicitation de la face avant de l'organe de réaction annulaire ;

la figure 3 est une vue en coupe suivant la ligne A-A de la figure 1 ;

la figure 4 est une vue analogue à la figure 3 montrant un autre mode de réalisation de l'invention ; et

la figure 5 représente, en coupe longitudinale, un autre système générateur de pression de freinage comprenant un maître-cylindre selon un autre mode de réalisation de l'invention.

Dans la description qui va suivre et sur les dessins, les éléments identiques ou analogues portent les mêmes chiffres de référence, éventuellement indicés.

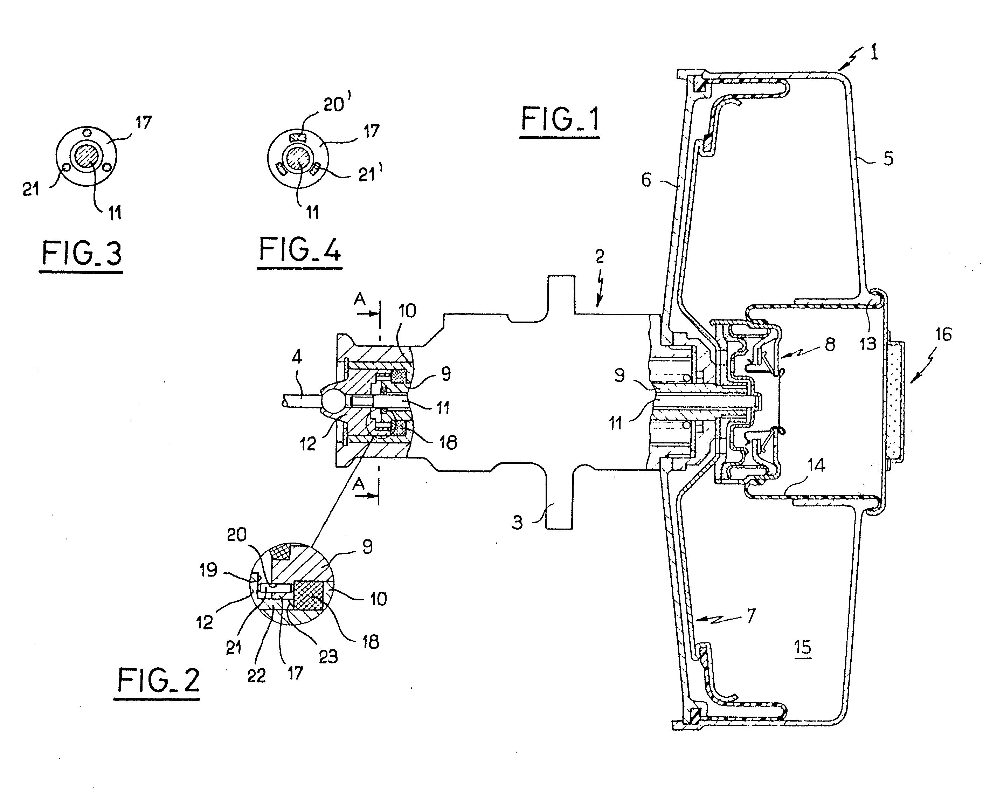

Le système générateur de pression de freinage représenté sur la figure 1 est du type général décrit dans la demande de brevet européen EP-A-0 110 756 déposée ce même jour par la demanderesse, et comprend de façon générale, un servomoteur d'assistance 1, en l'occurrence du type à dépression, monté en porte-à-faux à l'extrémité avant d'un maître-cylindre 2 comprenant des moyens, tels qu'une collerette 3, pour le montage de l'ensemble du système générateur de pression de freinage sur une paroi fixe d'un véhicule automobile, le système étant actionné, du côté du maître-cylindre 2 opposé au servomoteur 1, par une tige de commande 4 destinée à être reliée à une pédale de frein (non représentée) du véhicule. Le servomoteur 1 comprend un boîtier constitué par l'assemblage périphérique de deux coquilles 5 et 6 et divisé intérieurement en deux chambres par une structure de paroi mobile 7 formant piston portant centralement un ensemble de valve de distribution 8 et solidarisé à un organe de traction tubulaire 9 traversant axialement le maître-cylindre pour actionner en traction le piston primaire 10 de ce dernier. L'ensemble de valve 8 est actionné par une tige de poussée 11 s'étendant axialement à l'intérieur de l'organe de traction tubulaire 9 et connectée, à son extrémité opposée à la valve 8, à un poussoir d'actionnement d'entrée 12 reçu en coulissement dans l'extrémité du maître-cylindre 2 opposée au servomoteur 1 et couplé à la tige de commande 4. Dans le mode de réalisation représenté, l'ensemble de valve 8 est relié au bord annulaire intérieur 13 de la coquille frontale avant 5 du servomoteur par un organe d'étanchéité flexible 14 limitant intérieurement la chambre de dépression avant 15 du servomoteur, l'ouverture centrale de la coquille avant 5 étant fermée par une structure de filtrage 16.

Comme on le voit mieux sur la figure 2, l'extrémité de l'organe tubulaire de traction 9 opposée au servomoteur 1 forme une collerette s'étendant radialement vers l'extérieur 17 formant ainsi un épaulement avant, un organe de réaction annulaire 18, en matériau élastomère, étant disposé autour de l'organe de traction tubulaire 9, entre cet épaulement de la collerette 17 et la face adjacente formant épaulement annulaire du piston primaire 10 du maître-cylindre.

Le poussoir d'actionnement 12 forme intérieurement, en regard de la collerette 17, un épaulement annulaire 19 parallèle aux faces de cette collerette 17 et de l'organe de réaction annulaire 18. Dans le mode de réalisation des figures 1 à 3 et 5, la collerette 17 est formée avec des orifices cylindriques axiaux traversants 20 angulairement répartis, dans chacun desquels est reçu à coulissement un pion cylindrique 21 dont les extrémités opposées portent en appui contre l'épaulement annulaire intérieur 19 du poussoir 12 et contre la face adjacente de l'organe de réaction annulaire 18, en une zone de celui-ci plus proche de son diamètre interne que de son diamètre externe. Dans le mode de réalisation des figures 1 et 2, le poussoir d'actionnement 12 conserve une partie cylindrique périphérique s'étendant axialement 22, entourant la collerette 17 et venant porter contre la périphérie de l'organe de réaction annulaire 18. Comme on le voit sur la figure 2, au moins une des extrémités du pion 21 est biseautée ou arrondie, la partie cylindrique périphérique 22 de prolongation du poussoir 12 présentant également avantageusement un bord libre biseauté 23, ces conformations permettant une attaque avec déformation différentielle progressive du matériau de l'organe de réaction 18. En variante, ce dernier peut présenter, au droit des faces d'appui des pions 21 ou de la partie cylindrique 22, des protubérances en saillies assurant sensiblement la même fonction.

Dans le mode de réalisation représenté sur la figure 4, les pions cylindriques 21 sont substitués par des tronçons de secteurs annulaires 21', par exemple également au nombre de trois, les ouvertures traversantes 20' formées dans la collerette 17 étant conformées en conséquence. Les tronçons de secteur 21' peuvent également représenter des faces d'appui biseautées ou à profil évolutif.

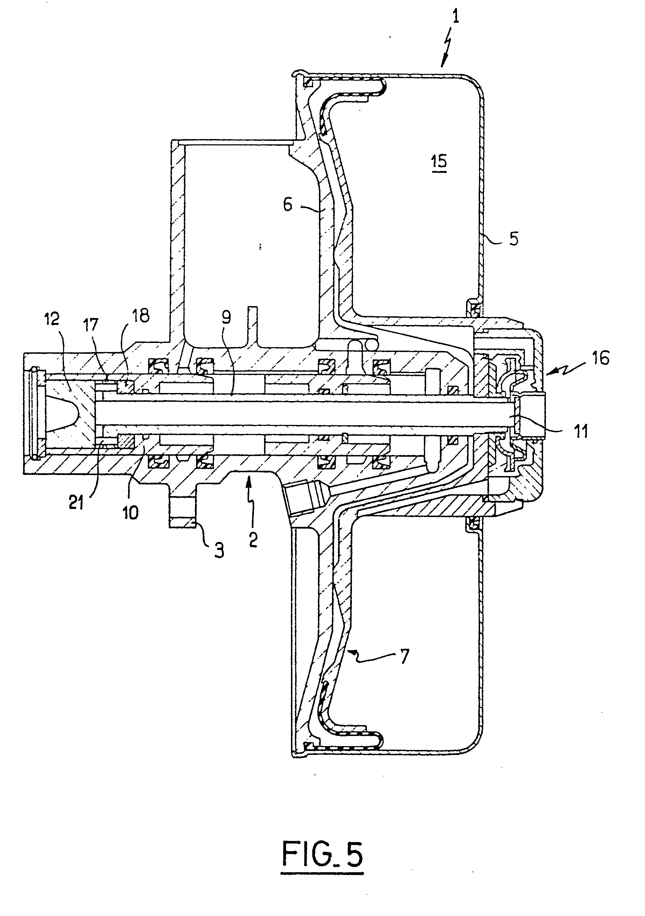

Dans le mode de réalisation de la figure 5, qui montre un sytème générateur de pression de freinage identique par ailleurs à celui de la figure 3 de la demande de brevet européen EP-A-0 045 231 sus-mentionnée, c'est-à-dire, notamment avec la paroi arrière 6 du servomoteur 1 d'une seule pièce avec le corps du maître-cylindre 2 et le réservoir de ce dernier, le poussoir 12 présente une face antérieure droite, en étant donc dépourvu de la partie cylindrique 22, l'effort de poussée du poussoir sur le disque de réaction 18 et, à travers ce dernier, sur le piston primaire 10, étant assuré exclusivement par des éléments de poussée traversant la collerette 17 d'extrémité de l'organe de traction tubulaire 9, et constitués, en l'occurrence, par des pions 21 de dimensions transversales et de nombres déterminés en conséquence.

## Revendications

1. Maître-cylindre pour au moins un circuit de freinage, comprenant un piston (10) coopérant, via un organe en matériau élastomère de réaction annulaire (18), d'une part avec une collerette centrale (17) solidaire d'un organe tubulaire (9) destiné à être couplé à un piston (7) d'un servomoteur d'assistance (1), et d'autre part avec un poussoir d'actionnement (12) comprenant au moins une première zone d'appui contre l'organe de réaction annulaire, caractérisé en ce qu'une deuxième zone d'appui est formée au moins partiellement par au moins un élément de poussée (21 ; 21') actionné par le poussoir (12) et s'étendant axialement au travers d'un orifice correspondant (20 ; 20') formé dans ladite collerette (17).

2. Maître-cylindre selon la revendication 1, caractérisé en ce qu'il comprend au moins deux éléments de poussée (21 ; 21').

3. Maître-cylindre selon la revendication 2, caractérisé en ce qu'il comprend au moins trois éléments de poussée (21 ; 21') angulairement répartis.

4. Maître-cylindre selon l'une des revendications 1 à 3, caractérisé en ce que l'élément de poussée est constitué par un pion cylindrique (21).

5. Maître-cylindre selon l'une des revendications 1 à 3, caractérisé en ce que l'élément de poussée est constitué par un tronçon de secteur annulaire (21').

6. Maître-cylindre selon l'une des revendications 1 à 5, caractérisé en ce que l'extrémité de l'élément de poussée (21 ; 21') venant en appui contre l'organe de réaction annulaire (18) est biseautée.

7. Maître-cylindre selon l'une des revendications 1 à 6, caractérisé en ce que le poussoir d'actionnement (12) comprend une partie cylindrique (22) formant la première zone d'appui avec l'organe de réaction (18) et entourant la collerette (17).

8. Maître-cylindre selon la revendication 7, caractérisé en ce que l'extrémité de la partie cylindrique (22) venant en appui contre l'organe de réaction annulaire (18) est biseautée (23).

## Claims

1. A master cylinder for at least one brake circuit, comprising a piston (10) cooperating on the one hand by means of an annular reaction member (18) of elastomeric material with a central flange (17) of a tubular member (9) adapted to be connected to a piston (7) of a servomotor (1), and on the other hand with an actuating push-rod (12) comprising at least a first abutment area for engaging the annular reaction member, characterized in that a second abutment area is formed at least partially by at least one thrust element (21 ; 21') actuated by the push-rod (12) and axially extending across a corresponding orifice (20 ; 21') formed in said flange (17).

2. The master cylinder of claim 1, characterized in that it comprises at least two thrust elements (21 ; 21').

3. The master cylinder of claim 2, characterized in that it comprises at least three angularly spaced thrust elements (21 ; 21').

4. The master cylinder of any of claims 1 to 3, characterized in that the thrust element is comprised of a cylindrical pin (21).

5. The master cylinder of any of claims 1 to 3, characterized in that the thrust element is comprised of an annular sector-shaped member (21').

6. The master cylinder of any of claims 1 to 5, characterized in that the extremity of the thrust element (21 ; 21') in engagement with the annular reaction member (18) is chamfered.

7. The master cylinder of any of claims 1 to 6, characterized in that the actuating push-rod (12) comprises a cylindrical portion (22) forming said first abutment area in engagement with the reaction member (18) and surrounding the flange (17).

8. The master cylinder of claim 7, characterized in that the extremity of the cylindrical portion (22) which is in engagement with the annular reaction member (18) is provided with a chamfer (23).

## Patentansprüche

1. Hauptzylinder für mindestens einen Bremskreis, mit einem Kolben (10), der über ein ringförmiges Reaktionsteil (18) aus elastomerem Material einerseits mit einem zentralen Flansch (17) und andererseits mit einem Betätigungsstößel (12) zusammenwirkt, von denen der zentrale Flansch einteilig mit einem Rohrstück (9) ausgebildet ist, das mit einem Kolben (7) eines Servomotors (1) verbindbar ist, und von denen der Betätigungsstößel mindestens einen ersten Anlagebereich zur Anlage an dem ringförmigen Reaktionsteil aufweist, dadurch gekennzeichnet, daß ein zweiter Anlagebereich zumindest teilweise durch mindestens ein Schubglied (21 ; 21') gebildet ist, das von dem Stößel (12) betätigt wird und sich axial durch eine in dem Flansch (17) gebildete entsprechende Öffnung (20 ; 20') erstreckt.

2. Hauptzylinder nach Anspruch 1, dadurch gekennzeichnet, daß er mindestens zwei Schubglieder (21 ; 21') aufweist.

3. Hauptzylinder nach Anspruch 2, dadurch gekennzeichnet, daß er mindestens drei in Umfangsrichtung verteilte Schubglieder (21 ; 21') aufweist.

4. Hauptzylinder nach einem der Ansprüche 1-3, dadurch gekennzeichnet, daß das Schubglied von einem zylindrischen Stift (21) gebildet wird.

5. Hauptzylinder nach einem der Ansprüche 1-3, dadurch gekennzeichnet, daß das Schubglied von einem ringsektorförmigen Teil (21') gebildet wird.

6. Hauptzylinder nach einem der Ansprüche 1-5, dadurch gekennzeichnet, daß das Ende des Schubgliedes (21 ; 21'), das an dem ringförmigen Reaktionsteil (18) anliegt, abgeschrägt ist.

7. Hauptzylinder nach einem der Ansprüche 1-6, dadurch gekennzeichnet, daß der Betätigungsstößel (12) einen zylindrischen Abschnitt (22) aufweist, der den ersten Anlagebereich zur Anlage an dem Reaktionsteil (18) bildet und den Flansch (17) umgibt.

8. Hauptzylinder nach Anspruch 7, dadurch gekennzeichnet, daß das Ende des zylindrischen Abschnittes (22), das an dem ringförmigen Reaktionsteil (18) anliegt, mit einer Abschrägung (23) versehen ist.

FIG_1

FIG_3

FIG_4

FIG_2

0 115 223

FIG. 5